# EUROPEAN PATENT SPECIFICATION

(11) **EP 4 475 225 B1**
(45) Date of publication and mention of the grant of the patent: **19.11.2025**
(21) Application number: 24179605.1
(22) Date of filing: 03.06.2024
(51) Int. Cl.: H01M 4/485, H01M 4/505, H01M 4/62, H01M 4/583, H01M 4/13, H01G 11/06, H01G 11/24, H01G 11/36, H01G 11/38, H01G 11/50, H01G 11/62, H01M 4/58, H01M 10/0525, H01M 10/0568, H01M 10/0569, H01M 4/02

(54) **ENERGY STORAGE CELLS WITH RAPID CHARGE AND DISCHARGE CAPACITIES**
ENERGIESPEICHERZELLEN MIT SCHNELLEN LADE- UND ENTLADEKAPABILITEN
CELLULES DE STOCKAGE D'ÉNERGIE À CAPACITÉS DE CHARGE ET DE DÉCHARGE RAPIDES

(30) Priority: 06.06.2023 DE 102023114903
(43) Date of publication of application: 11.12.2024
(73) Proprietor: Skeleton Technologies GmbH, 04420 Markranstädt (DE)
(72) Inventor: Pattarachai, Srimuk, 01900 Großröhrsdorf (DE)
(74) Representative: KASTEL Patentanwälte PartG mbB

(56) References cited:
- FR-A1- 3 127 331
- JP-A- 2018 101 628
- JP-A- 2019 164 932

## Description

The invention relates to energy storage cells, e.g. hybrid supercapacitors, with fast charge and discharge capabilities as well as their components, such as electrodes and electrolytes.

**In** recent years the demand for energy storage cells has substantially increased, be it in the field of automobiles, industrial applications, mass transportation, or grid regulation. The cells may serve as traction battery, intermediate energy storage for kinetic energy recovery systems, or energy storage for mechanical assistance systems, such as anti-skid systems or active shock absorbers. In grid regulation the cells store excess produced energy, in particular excess wind or solar energy, and help closing the energy gap in situations of high demand. For all these applications it is useful to have a type of energy storage cell that allows for fast charging or discharging, or in other words a high peak power.

Energy storage cells may generally be divided into batteries and capacitors. While batteries store electric energy in chemical form, capacitors usually store electric energy in the electric field. Batteries are usually not capable of achieving the peak powers that are required for the abovementioned applications.

Ultracapacitors, also known as supercapacitors, are a kind of capacitor and can be separated into double-layer capacitors and pseudocapacitors. The former store electrical energy in an electrostatic double-layer, whereas the latter store the electrical energy electrochemically, but in a different manner than batteries. Recently, hybrid (super)capacitors have been developed that combine the features of double-layer capacitors and pseudocapacitors.

These capacitors usually exhibit a large voltage variation during charging and discharging, whereas batteries do not. The main advantage for capacitors is that they are great for applications that require large peak powers or - in other words - a large energy transfer within very short time.

This capability, in particular for supercapacitors, is not without limits, since in general the actually usable capacity depends on the discharge current: the larger the current, the smaller the usable capacity.

JP 2018 101 628 A discloses a negative electrode active material for a secondary battery, the material comprising monoclinic type niobium titanium composite oxide particles; and a carbon material layer. The monoclinic type niobium titanium composite oxide particles are capable of occluding and releasing a Li ion or Na ion, and satisfy the expression 0.5 ≤ (α/β) ≤ 2, where α is a mole number of Nb in the niobium titanium composite oxide particles, β is a mole number of Ti in the niobium titanium composite oxide particles. The carbon material layer covers at least a part of the surface of each niobium titanium composite oxide particle, and satisfies the expression 0 ≤ (γ/σ) ≤ 0.1, where γ is a number of hydrogen atoms of the carbon material layer, and σ is a number of carbon atoms of the carbon material layer.

JP 2019 164 932 A discloses an electrode that comprises a current collector; and an active material-containing layer. The active material-containing layer is provided on at least one principal face of the current collector. The active material-containing layer contains an active material and a binding agent. The active material satisfies the expression 9 ≤ I₁/I₂ ≤ 12, where I₁ is an intensity of a first peak which shows a maximum intensity in a wave number range of 1155 cm⁻¹ or more and 1200 cm⁻¹ or less in infrared absorption spectra of the active material-containing layer according to total reflection measurement; and I₂ is an intensity of a second peak which shows a maximum intensity in a wave number range of 1390 cm⁻¹ or more and 1410 cm⁻¹ or less in the infrared absorption spectra.

FR 3 127 331 A1 discloses an electrochemical element comprising a cathode containing an active material operating at a potential of at least 4.7 V relative to the Li+/Li couple and at least one compound selected from lithium difluorophosphate (LiPO₂F₂), ethylene sulfate (ESA), lithium oxalate (Li₂C₂O₄); an anode; and an electrolyte.

US 5 258 245 A discloses a lithium battery comprising a positive electrode mainly of vanadium pentoxide, a negative electrode mainly of lithium doped niobium pentoxide, and an electrolyte mainly of an anhydrous solvent with dissolved lithium salt.

US 2021 / 0 110 980 A1, US 2021 / 0 110 979 A1, and US 2021 / 0 218 048 A1 disclose cell concepts that employ three or four electrodes.

DE 10 2018 202 929 A1 discloses a hybrid supercapacitor.

It is the object of the invention to improve ultracapacitors with respect to their electrical properties, preferably the actually usable capacity or charge/discharge speed.

The invention provides a negative active material composition for a negative electrode of an energy storage cell according to claim 1, the composition consisting of:
- 89 wt% to 96 wt% of negative active material;
- 3 wt% to 6 wt% of at least one binder;
- optionally up to 10.1 wt% in total of at least one conductive additive; and
- optionally less than 10 wt% in total of other components or impurities,
wherein the negative active material consists of Nb₂O₅ particles and microporous carbon (MC) particles.

Preferably, the proportion of the negative active material is 89.5 wt% to 95.2 wt%.

In the frame of the here described invention, the classification of pore sizes is followed according to guidelines provided by the "International Union of Pure and Applied Chemistry" (IUPAC), whereas "micropores" exhibit a pore diameter between 0-2 nm, "mesopores" exhibit a pore diameter between 2-50 nm and "macropores" exhibit a pore diameter above 50 nm.

The invention provides a method for manufacturing a negative electrode for an energy storage cell, the method comprising:
a) provide 1 wt% to 20 wt% binder in a mixing vessel;
b) mixing in the vessel, so as to obtain a slurry:
   - 60 wt% to 99 wt% of negative active material that includes microporous carbon (MC) particles;
   - optionally up to 10 wt% in total of at least one conductive additive; and
   - optionally less than 10 wt% in total of other components;
c) coating a conductive electrode substrate with the slurry and heating the coated electrode substrate, thereby generating the negative electrode.

In an embodiment all binders have a total proportion of 2 wt% to 8 wt%, preferably to 7 wt%, more preferably to 6 wt%. Preferably, the proportion of the negative active material is 89.5 wt% to 95.2 wt%. In an embodiment each binder has a proportion of no more than 2 wt%.

In an embodiment, the amount of Nb₂O₅ particles is 5 wt%, 10 wt%, 20 wt%, 30 wt%, 40 wt%, 50 wt%, 60 wt%, 70 wt%, 80 wt%,90 wt% or 95 wt%. In an embodiment, the amount of MC particles is 5 wt%, 10 wt%, 20 wt%, 30 wt%, 40 wt%, 50 wt%, 60 wt%, 70 wt%, 80 wt%, 90 wt% or 95 wt%.

In an embodiment the negative active material consists of Nb₂O₅ particles and MC particles. In an embodiment the Nb₂O₅ particles mostly consist of orthorhombic Nb₂O₅. In an embodiment the Nb₂O₅ particles consists of more than 90 wt% of orthorhombic Nb₂O₅.

In an embodiment the Nb₂O₅ particles have a particle size of D90 1 µm to 100 µm, preferably of 2 µm to 60 µm, more preferably of 10 µm to 30 µm. In an embodiment the Nb₂O₅ particles have a particle size of D10 0.05 µm to 10 µm, preferably 0.3 µm to 5 µm, more preferably of 0.3 µm to 3 µm.

In an embodiment the MC particles have a BET nitrogen surface area of at least 60 m²/g, preferably of at least 1000 m²/g.

In an embodiment the MC particles have a particle size D90 of 5 µm to 30 µm, preferably of 5 µm to 20 µm. In an embodiment the MC particles have a particle size of D10 1 µm to 2 µm. In an embodiment the MC particles comprise carbide derived carbon (CDC) particles.

In an embodiment each conductive additive is selected from a group consisting of carbon black, carbon nanotubes (CNTs), graphene, and mixtures thereof. Preferably, the CNTs are multi-walled CNTs (MWCNTs).

In an embodiment the composition includes 1 wt% to 10 wt% carbon black. In an embodiment the composition includes 1 wt% to 8 wt% carbon black. In an embodiment the composition includes 1 wt% to 3 wt% carbon black. In an embodiment the composition includes 2 wt% to 6 wt% carbon black. In an embodiment the composition includes 3 wt% to 7 wt% carbon black.

In an embodiment the composition includes 0.3 wt% to 2 wt% CNTs. In an embodiment the composition includes 0.3 wt% to 1.0 wt% CNTs.

The invention provides a positive active material composition for a positive electrode of an energy storage cell, the composition consisting of:
- 0.5 wt% to 10 wt% carbon black (CB);
- 1 wt% to 20 wt% of at least one binder;
- 56 wt% to 98.5 wt% of positive active material that for the most part includes or for the most part consists of LiMn_{0.6}Fe_{0.4}PO₄ (LMFP) particles;
- optionally 0.1 wt% to 2 wt% carbon nanotubes (CNTs);
- optionally 0.1 wt% to 2 wt% graphene; and
- optionally less than 10 wt% of other components or impurities.

The invention provides a method for manufacturing a positive electrode for an energy storage cell, the method comprising:
a) provide 1 wt% to 20 wt% binder in a mixing vessel;
b) mixing in the vessel, so as to obtain a slurry:
   - 0.5 wt% to 10 wt% carbon black (CB);
   - 56 wt% to 98.5 wt% of positive active material that consists of LMFP particles;
   - optionally 0.1 wt% to 2 wt% carbon nanotubes (CNTs); and
   - optionally 0.1 wt% to 2 wt% graphene;
c) coating a conductive electrode substrate with the slurry and heating the coated electrode substrate, thereby generating the positive electrode.

In an embodiment the LMFP particles have a particle size of D90 of 30 µm to 40 µm. Preferably, the LMFP particles have a particle size of D50 of 10 µm to 20 µm. Preferably, the LMFP particles have a particle size of D10 of 3 µm to 9 µm.

In an embodiment the proportion of CNTs deviates from the proportion of graphene or vice versa by less than 10%. In an embodiment the proportions of CNTs and graphene are identical.

The invention provides an energy storage cell for storing electrical energy, the cell comprising a plurality of electrodes that are immersed in an organic anhydrous electrolyte, wherein at least one electrode is configured as a negative electrode and at least one electrode is configured as a positive electrode, wherein the negative electrode includes a negative electrode material composition as previously described or obtainable by a previously described method. Alternatively, or additionally positive electrode includes a positive electrode material composition as previously described or obtainable by a previously described method.

In an embodiment the electrolyte consists of 80 vol% to 95 vol% acetonitrile, 5 vol% to 20 vol% ethylenecarbonate, and a lithium conductive salt.

In an embodiment the electrolyte consists of 50 vol% acetonitrile and 50 vol% ethylene carbonate and a lithium conductive salt.

In an embodiment the electrolyte consists of propylenecarbonate and a lithium conductive salt.

In an embodiment the electrolyte consists of 70 vol% propylenecarbonate and 30 vol% ethylenecarbonate and a lithium conductive salt.

In an embodiment the electrolyte consists of 25 vol% ethylenecarbonate, 5 vol% ethylmethylcarbonate and 70 vol% dimethylcarbonate and a lithium conductive salt.

The invention provides an organic anhydrous electrolyte composition for an energy storage cell, the composition consisting of
- 80 vol% to 95 vol% acetonitrile;
- 5 vol% to 20 vol% ethylenecarbonate; and added to that
- a lithium conductive salt.

In an embodiment the proportion of acetonitrile is 85 vol% to 93 vol% and the proportion of ethylenecarbonate is 7 vol% to 15 vol%. In an embodiment the proportion of acetonitrile is 88 vol% to 93 vol% and the proportion of ethylenecarbonate is 7 vol% to 12 vol%. In an embodiment the proportion of acetonitrile is 89 vol% to 91 vol% and the proportion of ethylenecarbonate is 9 vol% to 11 vol%.

In an embodiment the conductive lithium salt has a concentration of 0.1 mol/l to 3 mol/l.

In an embodiment the lithium conductive salt is selected from a group consisting of lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophosphate (LiPF₃(C₂F₅)₃) and mixtures thereof. In an embodiment the lithium conductive salt is LiPF₆.

The invention provides an energy storage cell for storing electrical energy, the cell comprising a positive electrode and a negative electrode immersed in an organic anhydrous electrolyte,
wherein the negative electrode includes a negative active material composition that has Nb₂O₅ particles and microporous carbon (MC) particles;
wherein the positive electrode includes a positive active material composition that for the most part hasLMFPparticles.

In an embodiment the negative active material composition includes a negative active material that consists of Nb₂O₅ particles and MC particles.

In an embodiment the amount of Nb₂O₅ particles and the amount of MC particles is selected from a group consisting of 5 wt%, 10 wt%, 20 wt%, 30 wt%, 40 wt%, 50 wt%, 60 wt%, and 70 wt%, such that the total amount is 100 wt%.

In an embodiment the negative electrode composition and/or the positive electrode composition include at least one conductive additive.

In an embodiment the at least one conductive additive is selected from a group consisting of carbon black (CB), carbon nanotubes (CNTs), graphene, and mixtures thereof.

In an embodiment the negative active material composition consists of more than 50 wt%, preferably of more than 60 wt%, negative active material. In an embodiment the positive active material composition consists of more than 50 wt%, preferably of more than 90 wt%, preferably of more than 95 wt%, preferably of 97 wt% or more, positive active material.

In an embodiment the Nb₂O₅ particles have a particle size of D90 1 µm to 100 µm, preferably 2 µm to 60 µm, more preferably 10 µm to 30 µm. In an embodiment the Nb₂O₅ particles have a particle size of D10 0.05 µm to 10 µm, preferably 0.3 µm to 5 µm, more preferably 0.3 µm to 3 µm

In an embodiment the MC particles have a BET nitrogen surface area of at least 60 m²/g, preferably of at least 1000 m²/g.

In an embodiment the MC particles have a particle size D90 of 5 µm to 30 µm, preferably 5 µm to 20 µm. In an embodiment the MC particles have a particle size of D10 1 µm to 2 µm.

In an embodiment the MC particles comprise carbide derived carbon particles.

In an embodiment CNTs are multi-walled CNTs (MWCNTs).

In an embodiment the negative electrode composition includes 1 wt% to 10 wt% carbon black. In an embodiment the negative electrode composition includes 1 wt% to 8 wt% carbon black. In an embodiment the negative electrode composition includes 1 wt% to 3 wt% carbon black. In an embodiment the negative electrode composition includes 2 wt% to 6 wt% carbon black. In an embodiment the negative electrode composition includes 3 wt% to 7 wt% carbon black.

In an embodiment the positive electrode composition includes 1 wt% to 10 wt% carbon black. In an embodiment the positive electrode composition includes 1 wt% to 8 wt% carbon black. In an embodiment the positive electrode composition includes 1 wt% to 3 wt% carbon black. In an embodiment the positive electrode composition includes 2 wt% to 6 wt% carbon black. In an embodiment the positive electrode composition includes 3 wt% to 7 wt% carbon black.

In an embodiment the negative electrode composition includes 0.3 wt% to 2 wt%, preferably 0.3 wt% to 1.0 wt% CNTs. In an embodiment the positive electrode composition includes 0.3 wt% to 2 wt%, preferably 0.3 wt% to 1.0 wt% CNTs.

In an embodiment the negative electrode composition includes 0.3 wt% to 2 wt%, preferably 0.3 wt % to 1.0 wt%, graphene. In an embodiment the positive electrode composition includes 0.3 wt% to 2 wt%, preferably 0.3 wt % to 1.0 wt%, graphene.

In an embodiment the proportion of CNTs deviates from the proportion of graphene or vice versa by less than 10%. In an embodiment the proportions of CNTs and graphene are identical.

In an embodiment the lithium conductive salt is selected from a group consisting of lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophosphate (LiPF₃(C₂F₅)₃) and mixtures thereof. In an embodiment the lithium conductive salt is LiPF₆.

The Nb₂O₅ particles allow redox reactions and intercalation of lithium ions into their crystal structure. The microporous carbon particles include micropores that provide a storage space for the metallic lithium. Due to the mixture of both, the lithium has a rather short path length to the sites where redox reactions may occur during charging or discharging. As a result, the equivalent series resistance (ESR) can be reduced to below 27.4 mΩ cm² for 1 s (dis-)charging time. For shorter (dis-)charging times of 10 ms the ESR can be reduced further to below 6.19 mΩ cm².

Experiments of the Applicant found that particular compositions of the conductive additives allow improvement of the available specific capacity depending on the specific current as well as the specific energy and specific power. The specific capacity is the amount of milliampere hours per gram of active material, whereas the specific current is the amount of milliamperes per gram of active material. The specific energy is given in watthours per kilogram of active material. The specific power is given in watt per kilogram of active material.

An increase by a factor of two of the available specific capacity for the negative electrode can be achieved with the addition of CNTs to carbon black alone. Using CNTs allows the available specific capacity to be above 80 mAh/g for specific currents up to 1000 mA/g.

Another improvement is the available cell voltage. Lithium-ion batteries (LIB) may have a cell voltage of about 4.2 V taking into account sacrificial additives in the electrolyte that passivate the electrode. This is undesirable here, since the passivation reduces the available peak power capacity. Due to the use of LMFP a maximum cell voltage of above 3.0V, up to 3.5 V is possible. Further improvement is possible with the electrolyte composition, which is stable enough to achieve these voltages.

The active materials of the electrodes allow a higher electrode density, which translate to a higher energy density. Overall, Applicant found that the specific energy, i.e. watthours per kilogram of active material, can be doubled compared to conventional cells. While the specific energy density is dependent on the specific cell power, i.e. watts per kilogram of active material, the improvement is irrespective of the specific cell power. Thus, an overall improvement of the electrical properties can be achieved for a wide range of applications.

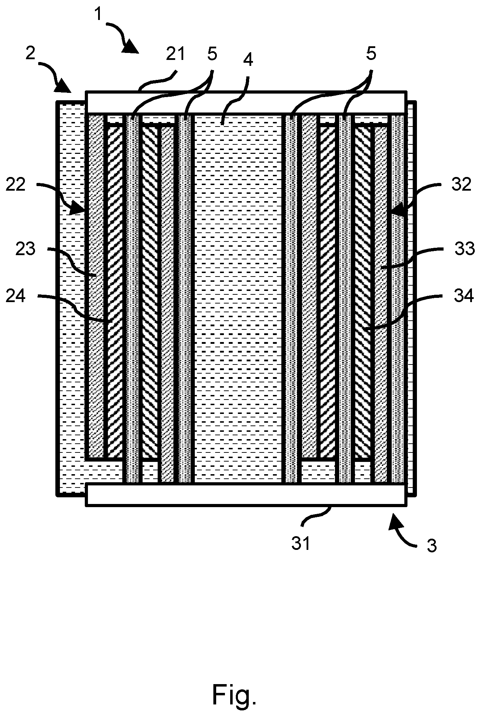

Embodiments of the invention are described in more detail with reference to the accompanying schematic drawings. Therein the only Fig. schematically depicts a cross-section through an energy storage cell according to the invention.

### Energy storage cell

As depicted in the Fig., an energy storage cell 1 may be configured as a hybrid ultracapacitor. The energy storage cell 1 is preferably formed as a cylinder. The energy storage cell 1 comprises a first electrode arrangement 2 and a second electrode arrangement 3. Both electrode arrangements are immersed in an organic anhydrous electrolyte 4. Furthermore, the energy storage cell 1 comprises a separator 5 that is interposed between the first and second electrode arrangements 2, 3.

It should be noted that the energy storage cell 1 usually contains a plurality of windings of the first and second electrode arrangements 2, 3 about the cylinder axis, however for the sake of clarity only portions are shown here.

The first electrode arrangement 2 comprises an anode terminal 21. The anode terminal 21 is arranged so that an external electric contact can be formed. The first electrode arrangement 2 comprises a negative electrode 22. The negative electrode 22 is electrically coupled to the anode terminal 21. The negative electrode 22 includes a current collector 23 that is made of metal, preferably aluminium. The current collector 23 contacts the anode terminal 21. The negative electrode 22 includes a negative electrode material 24.

The second electrode arrangement 3 comprises a cathode terminal 31. The cathode terminal 31 is arranged so that an external electric contact can be formed. The second electrode arrangement 3 comprises a positive electrode 32. The positive electrode 32 is electrically coupled to the anode terminal 31. The positive electrode 32 includes a current collector 33 that is made of metal, preferably aluminium. The current collector 33 contacts the cathode terminal 31. The positive electrode 32 includes a positive electrode material 34.

### Manufacturing the negative electrode - Example 1

Carboxymethyl cellulose (CMC) binder is provided and optionally mixed with water. The proportion of the CMC binder is 2 wt%.

Carbon black (CB) is added as a first conductive additive with a proportion of 5 wt%.

Microporous carbon (MC) particles and Nb₂O₅ particles are added as a negative active material. The Nb₂O₅ particles are made of orthorhombic Nb₂O₅. The negative active material makes up the remainder to 100 wt%, apart from unavoidable impurities. The negative active material consists of 60 wt% Nb₂O₅ particles and 40 wt% AC particles.

The AC particles have a particle size of D90 of 10 µm to 15 µm and the Nb₂O₅ particles have a particle size of D90 of 0.5 µm to 60 µm. The AC particles can be carbide derived carbon such as from SiC or TiC and have a BET nitrogen surface are of more than 1000 m²/g.

Styrene butadiene rubber (SBR) is added as a second binder with a proportion of 2 wt%.

After mixing a slurry is obtained that can be distributed onto a conductive electrode substrate, such as the current collector 23.

The coated substrate is then heated, so as to remove possible solvents and cure the binder, thereby forming the negative electrode 22.

### Example 2

The method of Example 1 is repeated, apart from the proportions of some components of the composition. The binders remain unchanged. CB is added with a proportion of 4 wt%. Carbon nanotubes (CNTs) are added as a second conductive additive with a proportion of 0.5 wt% together with the CB. The proportion of the negative active material is adapted accordingly.

### Example 3

The method of Example 2 is repeated, apart from the proportions of some components of the composition. The binders remain unchanged. Carbon black (CB) is added with a proportion of 2 wt%. CNTs are added with a proportion of 0.5 wt%. The proportion of the negative active material is adapted accordingly.

### Example 4

The methods of Example 1 to Example 3 are repeated, wherein the amount of Nb₂O₅ particles is changed to 30 wt%, 40 wt%, 50 wt%, and 70 wt%. The amount of AC particles is adapted accordingly to 70 wt%, 60 wt%, 50 wt%, and 30 wt%.

### Example 5

The methods of Example 1 to Example 3 are repeated, wherein the particle size of the AC particles is changed to D90 of 20 µm to 50 µm.

### Manufacturing the positive electrode - Example 1

Carboxymethyl cellulose (CMC) binder is provided and optionally mixed with water. The proportion of the CMC binder is 4 wt%.

Carbon black (CB) is added with a proportion of 2 wt%. Carbon nanotubes (CNTs) are added with a proportion of 1 wt%.

LiMn_{0.6}Fe_{0.4}PO₄ (LMFP) particles are added as a positive active material and make up the bulk of the positive electrode material.

Acrylic binder is added as a second binder with a proportion of 2 wt%.

After mixing a slurry is obtained that can be distributed onto a conductive electrode substrate, such as the current collector 33.

The coated substrate is then heated, so as to remove possible solvents and cure the binder, thereby forming the positive electrode 32.

### Example 2

The method of Example 1 is repeated, apart from the proportions of some components of the composition. The binders, CB, and positive active material remain unchanged. Now, instead of CNTs, 1 wt% of graphene is added.

### Example 3

The method of Example 1 is repeated, apart from the proportions of some components of the composition. The binders, CB, and positive active material remain unchanged. The proportion of CNTs is reduced to 0.5 wt% and in addition 0.5 wt% of graphene are added.

### Composition of electrolyte - Example 1

The organic anhydrous electrolyte 4 is obtained by mixing 50 vol % of acetonitrile (ACE) with 50 vol % of ethylenecarbonate (EC) and adding an amount of LiPF₆ so that the concentration in the liquid components is 1 mol/l.

### Example 2

The organic anhydrous electrolyte 4 is obtained by changing the amount of ACE to 45 vol%, 48 vol%, 49 vol%, 51 vol %, 53 vol%, and 55 vol% and adapting the amount of EC accordingly. The concentration of LiPF₆ remains unchanged.

### Example 3

The organic anhydrous electrolyte 4 is obtained by performing the mixing as described in Examples 1 and 2, wherein the concentration of LiPF₆ is changed to 0.5 mol/l, 1.5 mol/l, 2 mol/l, and 3 mol/l.

### Example 4

The organic anhydrous electrolyte 4 is obtained by performing the mixing as described in Examples 1 to 2, wherein LiPF₆ is replaced by one of the following conductive salts: lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophosphate (LiPF₃(C₂F₅)₃), or mixtures thereof.

### Composition of alternative electrolyte - Example 1

The organic anhydrous electrolyte 4 is obtained from adding an amount of LiPF₆ to propylenecarbonate (PC) so that the concentration in the liquid components is 1 mol/l.

### Example 2

The organic anhydrous electrolyte 4 is obtained by mixing 70 vol% PC and 30 vol% EC and adding an amount of LiPF₆ so that concentration in the liquid components is 1 mol/l.

### Example 3

The organic anhydrous electrolyte 4 is obtained by performing the mixing of Example 2 and changing the amount of PC to 65 vol%, 68 vol%, 69 vol%, 71 vol%, 73 vol%, and 75 vol% and adapting the amount of EC accordingly. The concentration of LiPF₆ remains unchanged.

### Example 4

The organic anhydrous electrolyte 4 is obtained by performing the mixing as described in one of the Examples 1 to 3, wherein the concentration of LiPF₆ is changed to 0.5 mol/l, 1.5 mol/l, 2 mol/l, and 3 mol/l.

### Example 5

The organic anhydrous electrolyte 4 is obtained by performing the mixing as described in one of the Examples 1 to 4, wherein LiPF₆ is replaced by one of the following conductive salts: lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophosphate (LiPF₃(C₂F₅)₃), or mixtures thereof.

### List of reference signs:

- 1: energy storage cell
- 2: first electrode arrangement
- 3: second electrode arrangement
- 4: electrolyte
- 5: separator

- 21: anode terminal
- 22: negative electrode
- 23: current collector
- 24: negative electrode material

- 31: cathode terminal
- 32: positive electrode
- 33: current collector
- 34: positive electrode material

## Claims

1. An energy storage cell (1) for storing electrical energy, the cell (1) comprising a negative electrode (22) and a positive electrode (32) that are immersed in an organic anhydrous electrolyte (4),
wherein the negative electrode (22) includes a negative active material composition that has Nb₂O₅ particles and microporous carbon (MC) particles;
wherein the positive electrode (32) includes a positive active material composition that for the most part has LiMn_{0.6}Fe_{0.4}PO₄ (LMFP) particles.

2. The cell (1) according to claim 1, wherein the negative active material composition includes a negative active material that consists of Nb₂O₅ particles and MC particles.

3. The cell (1) according to any of the preceding claims, wherein the negative electrode composition and/or the positive electrode composition include at least one conductive additive.

4. The cell (1) according to claim 3, wherein the at least one conductive additive is selected from a group consisting of carbon black (CB), carbon nanotubes (CNTs), graphene, and mixtures thereof.

5. The cell (1) according to any of the preceding claims, wherein the negative active material composition consists of more than 50 wt%, preferably of more than 60 wt%, negative active material, and/or wherein the positive active material composition consists of more than 50 wt%, preferably of more than 90 wt%, preferably of more than 95 wt%, preferably of 97 wt% or more, positive active material.

6. The cell (1) according to any of the preceding claims, wherein the Nb₂O₅ particles have a particle size of D90 1 µm to 100 µm.

7. The cell (1) according to any of the preceding claims, wherein the MC particles have a BET nitrogen surface area of at least 60 m²/g, preferably of at least 1000 m²/g.

8. The cell (1) according to any of the preceding claims, wherein the MC particles have a particle size D90 of 5 µm to 30 µm.

9. The cell (1) according to any of the claims 4 to 8, wherein the negative electrode composition and/or the positive electrode composition include 1 wt% to 10 wt% carbon black.

10. The cell (1) according to any of the claims 4 to 9, wherein the negative electrode composition and/or the positive electrode composition include 0.3 wt% to 2 wt% CNTs.

11. The cell (1) according to any of the claims 4 to 10, wherein the negative electrode composition and/or the positive electrode composition include 0.3 wt% to 2 wt% graphene.

12. The cell (1) according to claim 10 and 11, wherein the proportion of CNTs deviates from the proportion of graphene or vice versa by less than 10%.

13. The cell (1) according to claim 12, wherein the proportions of CNTs and graphene are identical.

14. The cell (1) according to any of the preceding claims, wherein the electrolyte includes a lithium conductive salt, 80 vol% to 95 vol% acetonitrile, and 5 vol% to 20 vol% ethylenecarbonate.

15. The cell (1) according to claim 14, wherein the lithium conductive salt is selected from a group consisting of lithium perchlorate (LiClO₄), lithium tetrafluoroborate (LiBF₄), lithium hexafluorophosphate (LiPF₆), lithium hexafluoroarsenate (Li-AsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophos-phate (LiPF₃(C₂F₅)₃) and mixtures thereof.

## Patentansprüche

1. Energiespeicherzelle (1) zum Speichern elektrischer Energie, wobei die Zelle (1) eine negative Elektrode (22) und eine positive Elektrode (32) umfasst, die in einen organischen wasserfreien Elektrolyt (4) eingetaucht sind,
wobei die negative Elektrode (22) eine negative Aktivmaterialzusammensetzung umfasst, die Nb₂O₅-Partikel und mikroporöse Kohlenstoffpartikel (MC) enthält;
wobei die positive Elektrode (32) eine positive Aktivmaterialzusammensetzung umfasst, die zum größten Teil LiMn_{0.6}Fe_{0.4}PO₄- (LMFP-)Partikel aufweist.

2. Zelle (1) nach Anspruch 1, wobei die negative Aktivmaterialzusammensetzung ein negatives Aktivmaterial umfasst, das aus Nb₂O₅-Partikeln und MC-Partikeln besteht.

3. Zelle (1) nach einem der vorhergehenden Ansprüche, wobei die negative Elektrodenzusammensetzung und/oder die positive Elektrodenzusammensetzung mindestens einen Leitzusatz umfasst.

4. Zelle (1) nach Anspruch 3, wobei der mindestens eine Leitzusatz aus einer Gruppe ausgewählt ist, die aus Ruß (CB), Kohlenstoffnanoröhren (CNTs), Graphen und Mischungen davon besteht.

5. Zelle (1) nach einem der vorhergehenden Ansprüche, wobei die negative Aktivmaterialzusammensetzung aus mehr als 50 Gew.-%, vorzugsweise mehr als 60 Gew.-%, negativem aktivem Material besteht und/oder wobei die positive Aktivmaterialzusammensetzung aus mehr als 50 Gew.-%, vorzugsweise mehr als 90 Gew.-%, vorzugsweise mehr als 95 Gew.-%, vorzugsweise 97 Gew.-% oder mehr, positivem Aktivmaterial besteht.

6. Zelle (1) nach einem der vorhergehenden Ansprüche, wobei die Nb₂O₅-Partikel eine Partikelgröße von D90 1 µm bis 100 µm aufweisen.

7. Zelle (1) nach einem der vorhergehenden Ansprüche, wobei die MC-Partikel eine BET-Stickstoffoberfläche von mindestens 60 m²/g, vorzugsweise von mindestens 1000 m²/g, aufweisen.

8. Zelle (1) nach einem der vorhergehenden Ansprüche, wobei die MC-Partikel eine Partikelgröße D90 von 5 µm bis 30 µm aufweisen.

9. Zelle (1) nach einem der Ansprüche 4 bis 8, wobei die negative Elektrodenzusammensetzung und/oder die positive Elektrodenzusammensetzung 1 Gew.-% bis 10 Gew.-% Ruß enthält.

10. Zelle (1) nach einem der Ansprüche 4 bis 9, wobei die negative Elektrodenzusammensetzung und/oder die positive Elektrodenzusammensetzung 0,3 Gew.-% bis 2 Gew.-% CNTs enthält.

11. Zelle (1) nach einem der Ansprüche 4 bis 10, wobei die negative Elektrodenzusammensetzung und/oder die positive Elektrodenzusammensetzung 0,3 Gew.-% bis 2 Gew.-% Graphen enthält.

12. Zelle (1) nach Anspruch 10 und 11, wobei der Anteil an CNTs um weniger als 10 % vom Anteil an Graphen abweicht oder umgekehrt.

13. Zelle (1) nach Anspruch 12, wobei die Anteile von CNTs und Graphen identisch sind.

14. Zelle (1) nach einem der vorhergehenden Ansprüche, wobei der Elektrolyt ein leitfähiges Lithiumsalz, 80 Vol.-% bis 95 Vol.-% Acetonitril und 5 Vol.-% bis 20 Vol.-% Ethylencarbonat enthält.

15. Zelle (1) nach Anspruch 14, wobei das leitfähiges Lithiumsalz aus einer Gruppe ausgewählt ist, die aus Lithiumperchlorat (LiClO₄), Lithiumtetrafluorborat (LiBF₄), Lithiumhexafluorophosphat (LiPF₆), Lithiumhexafluoroarsenat (LiAsF₆), Lithiumtrifluormethansulfonat (LiSO₃CF₃), Lithiumbis(trifluormethylsulfonyl)imid (LiN(SO₂CF₃)₂), Lithiumbis(pentafluorethanesulfonyl)imid (LiN(SO₂C₂F₅)₂), Lithiumbis(oxalato)borat (LiBOB, LiB(C₂O₄)₂), Lithiumdifluoro(oxalato)borat (LiBF₂(C₂O₄)), Lithiumtris(pentafluorethyl)trifluorophosphat (LiPF₃(C₂F₅)₃) und Mischungen daraus besteht.

## Revendications

1. Cellule de stockage d'énergie (1) destinée à stocker de l'énergie électrique, la cellule (1) comprenant une électrode négative (22) et une électrode positive (32) qui sont immergées dans un électrolyte organique anhydre (4),
dans laquelle l'électrode négative (22) comprend une composition de matière active négative qui comprend des particules de Nb₂O₅ et des particules de carbone microporeux (MC);
dans laquelle l'électrode positive (32) comprend une composition de matière active positive qui comprend pour l'essentiel des particules de LiMn_{0.6}Fe_{0.4}PO₄ (LMFP).

2. Cellule (1) selon la revendication 1, dans laquelle la composition de matière active négative comprend une matière active négative qui consiste en particules de Nb₂O₅ et en particules de MC.

3. Cellule (1) selon l'une quelconque des revendications précédentes, dans laquelle la composition d'électrode négative et/ou la composition d'électrode positive comprennent au moins un additif conducteur.

4. Cellule (1) selon la revendication 3, dans laquelle ledit au moins un additif conducteur est choisi parmi un groupe comprenant du noir de carbone (CB), des nanotubes de carbone (CNTs), du graphène et des mélanges de ceux-ci.

5. Cellule (1) selon l'une quelconque des revendications précédentes, dans laquelle la composition de matière active négative est constituée de plus de 50 % en poids, de préférence de plus de 60 % en poids, de matière active négative, et/ou dans laquelle la composition de matière active positive est constituée de plus de 50 % en poids, de préférence de plus de 90 % en poids, de préférence de plus de 95 % en poids, de préférence de 97 % en poids ou plus, de matière active positive.

6. Cellule (1) selon l'une quelconque des revendications précédentes, dans laquelle les particules de Nb₂O₅ ont une taille de particule de D90 comprise entre 1 µm et 100 µm.

7. Cellule (1) selon l'une quelconque des revendications précédentes, dans laquelle les particules MC ont une surface spécifique BET d'azote d'au moins 60 m²/g, de préférence d'au moins 1000 mg²/g.

8. Cellule (1) selon l'une quelconque des revendications précédentes, dans laquelle les particules MC ont une taille de particules D90 de 5 µm à 30 µm.

9. Cellule (1) selon l'une quelconque des revendications 4 à 8, dans laquelle la composition d'électrode négative et/ou la composition d'électrode positive comprennent 1 % en poids à 10 % en poids de noir de carbone.

10. Cellule (1) selon l'une quelconque des revendications 4 à 9, dans laquelle la composition d'électrode négative et/ou la composition d'électrode positive comprennent 0,3 % en poids à 2 % en poids de CNTs.

11. Cellule (1) selon l'une quelconque des revendications 4 à 10, dans laquelle la composition d'électrode négative et/ou la composition d'électrode positive comprennent 0,3 % en poids à 2 % en poids de graphène.

12. Cellule (1) selon les revendications 10 et 11, dans laquelle la proportion de CNTs s'écarte de la proportion de graphène ou vice versa de moins de 10 %.

13. Cellule (1) selon la revendication 12, dans laquelle les proportions de CNTs et de graphène sont identiques.

14. Cellule (1) selon l'une quelconque des revendications précédentes, dans laquelle l'électrolyte comprend un sel conducteur de lithium, 80 % en volume à 95 % en volume d'acétonitrile et 5 % en volume à 20 % en volume de carbonate d'éthylène.

15. Cellule (1) selon la revendication 14, dans laquelle le sel conducteur de lithium est choisi parmi un groupe comprenant le perchlorate de lithium (LiClO₄), le tétrafluoroborate de lithium (LiBF₄), l'hexafluorophosphate de lithium (LiPF₆), l'hexafluoroarsénate de lithium (LiAsF₆), le trifluorométhanesulfonate de lithium (LiSO₃CF₃), le bis(trifluorométhylsulfonyl)imide de lithium (LiN(SO₂CF₃)₂), le bis(pentafluoroéthanesulfonyl)imide de lithium (LiN(SO₂C₂F₅)₂), le bis(oxalato)borate de lithium (LiBOB, LiB(C₂O₄)₂), le difluoro(oxalato)borate de lithium (LiBF₂(C₂O₄)), le tris(pentafluoroéthyl)trifluorophosphate de lithium (LiPF₃(C₂F₅)₃) et leurs mélanges.
